# EUROPEAN PATENT SPECIFICATION

(11) **EP 2 811 454 B1**
(45) Date of publication and mention of the grant of the patent: **07.08.2019**
(21) Application number: 13170945.3
(22) Date of filing: 06.06.2013
(51) Int. Cl.: G06T 3/00

(54) **Image transformation**
Bildumwandlung
Transformation d'image

(43) Date of publication of application: 10.12.2014
(73) Proprietor: Socionext Inc., Yokohama-shi, Kanagawa 222-0033 (JP)
(72) Inventor: Richter, Roland, 81476 Munich (DE)
(74) Representative: Haseltine Lake Kempner LLP

(56) References cited:
- EP-A2- 0 676 890
- WO-A1-99/27455
- WO-A1-2006/063888
- US-A1- 2005 243 103
- US-B1- 6 819 333

## Description

The present invention relates to the generation of a target image from a source image, by way of transformation. More particularly, the present invention concerns the process of manipulating or transforming a source image so as to affect a desired distortion or distortion-correction, thereby generating a target image.

Such manipulation is often referred to as image "warping". In typical image warping, points are mapped to points without changing colours, and the technique is often described as a two-dimensional "re-sampling" of an image. For example, warping may be considered a mapping of a two-dimensional planar region onto a two-dimensional surface (planar or non-planar). However, the present invention may extend to manipulation which, as well as employing such warping, affects colours. For example, one pixel in the target image may be generated based on a plurality or group of pixels in the source image, by way of interpolation, averaging, or some other filtering process. In certain applications, an image may be mapped onto a two-dimensional projection of a three-dimensional surface or portion of such a surface.

It will be appreciated that the present invention may be equally applied to video, in which a series of target images are generated based on a series of source images.

One possible application of the present invention is in the pre-distortion of images to compensate for the distortion suffered by those images (as perceived by the viewer) when they are projected onto a curved or non-planar surface.

For example, head-up display (HUD) technology was originally developed for use by pilots in military aviation but has since entered a wide range of commercial markets, such as the gaming and automotive markets. In the automotive market, for example, a HUD typically presents information in graphical form by projecting it onto the windscreen or windshield, allowing the user to keep the usual viewpoint while driving a car or other vehicle, for example.

Since typical windshields are not planar (i.e. not flat or uncurved), or perpendicular to the driver's eyes, this projection results in a distortion of the display content in the visual perception of the driver (user/viewer). A pre-distortion of the image being projected can compensate for this effect, as mentioned above, and is commonly referred to as warping. In effect, a re-sampling of the display image (source image) with a non-affine transformation is required before sending it to the projector.

Another possible application of the present invention is to remove distortion effects in source images obtained via image sensors. For example, in many applications, distortions, aberrations, or other flaws are introduced by sensors that are used to obtain data to generate a source image. These sensors can be any means for capturing or creating a source image, such as, for example, lenses, magnetic resonant imaging, CAT scans, and digitised scans of existing images. It is highly desirable to be able to remove imperfections introduced by the sensors from the source image. Filtering is not always able to remove certain types of flaws. Thus, image warping is used.

The present inventor has considered how to efficiently implement such image transformation, for example in hardware such as a graphic display controller (display control hardware). In particular, the inventor has considered how to efficiently store and process information about the transformation characteristics, with a view to enabling any kind of transformation to be performed (i.e., arbitrary transformation or warping).

US-A-5175808 discloses a method and apparatus for two-part image transformation, providing a general solution to execute arbitrary warping of an image. A bi-cubic mesh is created, by splines or other suitable means, and is used to create displacement tables for X and Y displacement. Alternatively, the displacement tables can be generated directly. The displacement tables represent the movement of each pixel from an original location in the source image to a new location in the destination image, and are stored in the apparatus. One of the displacement maps is applied to the source image to create an intermediate image and to the other displacement map to create a re-sampled displacement map. The re-sampled map is then applied to the intermediate image to create the destination image. By re-sampling, compensation for altered location points is done automatically. In this manner, no inversion of the underlying equations and functions is required.

US-2008/0088527-A1 discloses a vehicle having a head-up display (HUD) system. The HUD system includes an image rendering device configured to provide a distorted representation of image data to a non-planar surface within a field of view of an occupant of the vehicle (driver or passenger). Warp image circuitry is provided, configured to store offsets to be applied to the image data to generate the distorted representation provided to the image rendering device is included. The offsets represent respective distances for moving coordinates of a portion of pixels within the image data and the offsets are stored within a memory region the warp image circuitry. The offsets are derived through calibration data provided to the warp image circuitry. The calibration data is selected from one of a plurality of view positions for the occupant. In effect, offsets are provided per pixel of the target image, and indicate for each target pixel which pixel of the source image is to be employed. The offset for a particular target pixel may be thought of as a distance from a corresponding pixel in the source image (which would correspond to the target pixel if there were no transformation) to the intended pixel in the source image (given the transformation). It is also disclosed that actual coordinates (of the intended pixels in the source image) may be stored, rather than offsets.

The inventor has considered the following problems.

In a "brute force" approach, it would be possible to store a set of coordinates for each target pixel of a target image, where each coordinate identifies a source location in a source image based upon which the colour value of the target pixel is generated. In a simple case, for example, each set of coordinates would identify a single pixel in the source image whose colour value becomes the colour value of the target pixel concerned. This corresponds to an extent to the storage of "absolute" coordinates as in US-2008/0088527-A1 (as discussed above).

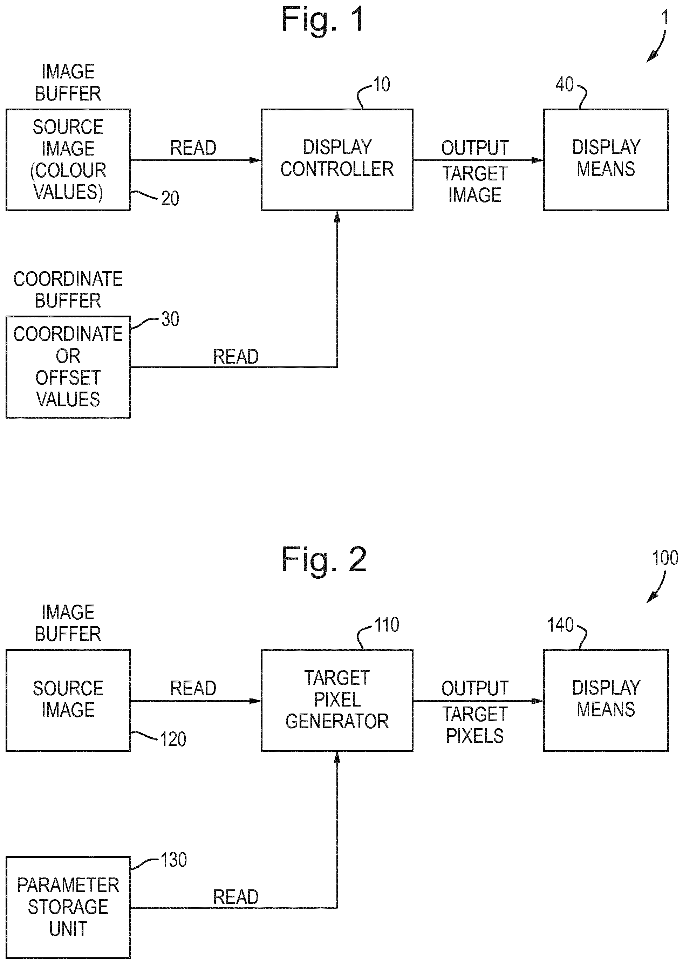

An example system is depicted in Figure 1. The system 1 comprises a display controller 10, an image buffer 20, and a coordinate buffer 30. The image buffer 20 stores a source image, or more particularly one or more colour values per pixel of the source image. It is appreciated that an image may be provided in black & white, or in greyscale. Where colour values are referred to herein, this is simply by way of example and it will be understood that other image formats could equally be employed. The coordinate buffer 30 stores a coordinate value per pixel, as discussed above. The display controller 10 is configured to read colour values from the image buffer 20 and coordinate values from the coordinate buffer 30 and to generate and output a target image based thereon.

Also present in the system 1 is a display means 40, which is configured to receive the target image and display it to a user. Display means 40 may be a display panel or a projector, or a head-up display unit, for example. Of course, display means 40 may be replaced with (or used in combination with) storage means for storing the target image or any other means configured to receive and handle image data.

In system 1, pixel colour is expressed in 24-bit values, and the X and Y coordinates are each expressed as a 10-bit integer value and a 4-bit fractional value, as a running example. In such a case, image buffer 20 might require 24 bits capacity per pixel and the coordinate buffer 30 might require 28 bits capacity per pixel. That is, the coordinate buffer 30 might be significant in size, for example, with a size similar to or exceeding the size of the image buffer 20.

In an "offset" approach, as also depicted in Figure 1 for convenience, it would be possible to store offset values (also having X and Y components) for each target pixel in the coordinate buffer 30, where each offset value identifies an intended source location given desired transformation by its position relative to a source location which would apply no transformation. Such an approach corresponds to an extent to the use of offsets as in US-2008/0088527-A1 (as also discussed above).

Taking the example system of Figure 1 in which the image buffer 20 might require 24 bits capacity per pixel, the coordinate buffer 30 (storing offset values) might in this case require around 24 bits per pixel (8-bit integer value and 4-bit fractional value for each of X and Y). Thus, although the offset approach might allow a saving in buffer capacity, the saving may be rather modest.

It is desirable to solve some or all of the above problems.

WO-A1-2006/063888 discloses a system and method for image transformation. US-B1-681933 discloses a system and method for displaying an image using display distortion correction. US-A1-2005/0243103 discloses a method for quickly warping a 2-D image using only integer math. EP-A2-0676890 discloses an image input device having optical deflection elements for capturing multiple sub-images. WO-A1-99/27455 discloses a data resampler for a data processing system.

The present invention is defined by the independent claims, to which reference should now be made. Specific embodiments are defined in the dependent claims.

There is disclosed herein a method of generating a target image based on a source image, the target image comprising target pixels and the source image comprising source pixels, the method comprising: generating a pixel value for each target pixel based upon a pixel value of one or more source pixels associated with a corresponding source location in the source image, wherein: the source locations are linked by a pattern of offset vectors, each offset vector indicating the location of a respective source location relative to that of (i.e. the location of) an adjacent source location in the pattern; and the method comprises calculating at least one of the source locations based on said pattern of offset vectors.

Advantageously, the calculation of such source locations may render the storage of those locations in advance unnecessary. For example, it may thus be possible to store a smaller amount of information (requiring less storage capacity) than needed to store those source locations themselves, and instead calculate those source locations (e.g. on-the-fly) based on the stored smaller amount of information. Such smaller amount of information may relate to the offset vectors, in the sense of comprising the offset vectors or other vectors from which the offset vectors may be calculated.

The source pixels may be received in a stream and handled on-the-fly, e.g. one-by-one, the generation of pixel values of the target pixels depending on the handling of one or more such source pixels (for example involving some accumulation of intermediate values to generate the pixel values of the target pixels, perhaps applying weightings to the intermediate values in the accumulation). The pixel values for the target pixels may be generated on-the-fly, target pixel by target pixel in an order to make available a stream of target pixels. The or each calculation may be performed on-the-fly, calculating the source location(s) as needed. On-the-fly may be interpreted as being on an "as needed" basis, for example while generating the target image or during generation of the target image, e.g. on a pixel-by-pixel basis.

The source image may be part of a larger image. The target image may be part of a larger image. The source pixels may be adjacent pixels such that the source image has no gaps. The target pixels may be adjacent pixels such that the target image has no gaps. The source and/or target pixels may be arranged or organised such that the images concerned have one or more gaps.

The or each pixel value may have a single component part or may be made up of a plurality of component parts. For example, the or each pixel value may have three component parts corresponding to three different colours. The or each pixel value may be an integer value, optionally along with a fractional value. The or each pixel value may be expressed by way of a given number of bits, in accordance with an image format.

A pixel value for a target pixel may be based upon a pixel value of one or more source pixels associated with a corresponding source location in the source image, in the sense that the one or more source pixels are at or near the source location. For example, a pixel value for a target pixel may be generated by a weighted combination of (pixel values of) a group of source pixels which form a region of the source image in which the source location lies. The weighting may depend on where in the region the source location lies.

The source locations may be linked (or associated or related or defined) by a pattern of offset vectors, in the sense that combining a source location with an offset vector (e.g. by addition) produces another one of the source locations. For example, where two source locations are linked by an offset vector, the sum of one of those source locations and the offset vector may produce or define the other one of those source locations. The pattern of offset vectors may be considered to be a pattern of the offset vectors and the source locations, such that the source locations correspond to points and the offset vectors correspond to lines (vectors) linking the points. The pattern may thus have the form of a mesh or grid or tree.

Such calculation may be carried out on-the-fly, and may involve starting with one of the source locations, and combining with it sequentially (e.g. by addition) offset vectors following the pattern structure to thus generate in turn other source locations in the pattern. Thus, such calculation may be based on the pattern in the sense that it follows the structure of the pattern, combining known pieces of information (source locations and/or offset vectors) to calculate one or more new pieces of information (e.g. a source location). Such known pieces of information may be known in the sense that they have been calculated or accessed from storage (e.g. memory). For example, the calculation of at least a particular one of the source locations based on said pattern of offset vectors may comprise combining a source location adjacent to the particular source location with the offset vector linking those two source locations, for example by addition.

Each said offset vector may have a magnitude related to the distance between the two source locations it links. For example, the magnitude may be equal to or proportional to the distance between the two source locations it links.

Each said offset vector may have a direction related to a direction between the two source locations it links. For example, the direction may be equal to or rotated relative to the direction between the two source locations it links.

The method may comprise obtaining one of said source locations as a reference source location (for example from external storage, or from a prior calculation) and calculating at least a candidate one of the other source locations in said pattern based on the reference source location and the or each offset vector linking the reference source location to the candidate source location in said pattern. As above, this may involve following the pattern.

The method may comprise calculating some or all of said other source locations based on the reference source location and the or each offset vector linking the reference source location to those other source locations. For example, one or more source locations may be known in advance and accessible from storage.

The method may comprise storing the offset vectors in advance, for example in storage such as memory. Such memory may be considered external/remote or internal memory. The or each source-location calculation may thus comprise accessing the or each stored offset vector concerned.

It may be considered that the offset vectors are expressed by X-bit values and the source locations are expressed by Y-bit values, where X is less than Y. Thus, storage of the offset vectors may require less capacity than storage of the source locations. Indeed, storage of one or more offset vectors instead of one or more source locations may reduce the storage capacity required. For example, Y may be 24 or 32 whereas X may be 16 or 8 or 4 or 2.

The source locations may be organised into an order. The offset vectors may link the source locations one to the next in said order. The order may follow (e.g. be the same as) an order of corresponding target pixels.

The order may be such that the source locations and offset vectors form a tree structure, the source locations being nodes of the tree and the offset vectors being branches which link the nodes. The order may correspond to an order of the target pixels. The order of the target pixels may be pixel-by-pixel along each line in turn, starting from the uppermost line. The tree structure may have a main trunk whose source locations correspond to a column of said target pixels, e.g. a left-most such column (in the context of a target image), and a plurality of main branches each of which extends from the main trunk and whose source locations correspond to a row of the target pixels.

Each offset vector may be defined by a combination of a derivable vector and a correction vector. A derivable vector may be derivable in the sense that it may be calculated or obtained based on other information known (through accessing storage or calculation) about the pattern.

The method may comprise, when calculating at least one of the source locations, obtaining at least one of the offset vectors concerned by deriving its derivable vector and combining the derivable vector with its correction vector. The method may comprise, when calculating the at least one of said source locations, obtaining some or all of the offset vectors concerned by, for each of those offset vectors, deriving its derivable vector and combining the derivable vector with its correction vector.

Advantageously, the calculation of such offset vectors may render the storage of those offset vectors in advance unnecessary. For example, it may thus be possible to store a smaller amount of information (requiring less storage capacity) than needed to store those offset vectors themselves (or indeed the source locations), and instead calculate those offset vectors based on the stored smaller amount of information. Such smaller amount of information may relate to the correction vectors, for example in the sense of comprising the correction vectors.

The derivable vector of each offset vector may have a magnitude and/or direction related to the magnitude and direction of another one of the offset vectors. For example, the magnitude and direction of a derivable vector may be the same as the magnitude and direction of another one of the offset vectors. As such, that derivable vector may be derivable in the sense that it is the same as an offset vector, or calculable from an offset vector (e.g. a vector transformation of an offset vector).

The derivable vector of each of a group of said offset vectors may have a magnitude and direction related to (e.g. the same as) the magnitude and direction of another one of the offset vectors earlier in the order. The derivable vector of each of a group of said offset vectors may have a magnitude and direction related to (e.g. the same as) the magnitude and direction of the offset vector immediately earlier in the order.

It may be the case that each derivable vector is derivable from one or more calculation results which would arise from calculation of the or each source location earlier in the order. For example, by following the order, which may step through the pattern source location by source location, it may thus be possible starting from one source location to find the next source location in the order by using an offset vector from earlier (in the sense of the order) in the pattern as (or to find) the derivable vector which when combined with the relevant correction vector gives the offset vector which will locate that next source location.

The method may comprise carrying out calculations relating to calculation of said source locations in order of said source locations so as to obtain the calculation results required to derive the derivable vectors concerned as needed. Thus the calculations may progress through the (e.g. tree) pattern of source locations in sequence (i.e. following the order), and using calculated (or accessed) source locations and offset vectors to calculate further source locations and offset vectors. This may be considered as effectively building or constructing the pattern. This may effectively lead to generating pixel values for the target pixels also in that order, and thus generating those values in a convenient and efficient order (for example, in an order in which they may be input to a display).

The method may comprise storing the correction vectors in advance, for example in storage such as memory. Such memory may be considered external/remote or internal memory. The or each source-location calculation may thus comprise accessing the stored correction vectors.

It may be considered that the offset vectors are expressed by X-bit values and the source locations are expressed by Y-bit values, where X is less than Y. It may be considered that the correction vectors are expressed by Z-bit values, where Z is less than X. Thus, storage of the correction vectors may require less capacity than storage of the offset vectors or source locations. Indeed, storage of one or more correction vectors instead of one or more offset vectors or source locations may reduce the storage capacity required. For example, Y may be 24 or 32, X may be 16 or 8, and Z may be 4 or 2.

At least groups of said target pixels may be mutually-adjacent pixels. All of the target pixels may be mutually-adjacent pixels (i.e. forming a continuous image area, e.g. without gaps or holes).

The method may comprise composing the source image from a plurality of source-image component parts before generating the pixel values for the target pixels. Such component parts may be image layers, and such composition may take account of overlapping such layers. Thus, the locations of the source locations in the source image may be independent of the relative locations of the component parts within the source image. For example, the relative locations of the components parts may change over time, for example in response to an input from a user of the target image.

There is also disclosed herein a method of generating a target image based on a source image, the target image comprising target pixels and the source image comprising source pixels, the method comprising: generating a pixel value for each target pixel based upon a pixel value of one or more source pixels associated with a corresponding source location in the source image; and composing said source image from a plurality of source-image component parts before generating the pixel values for the target pixels. The method may comprise calculating at least one (or some or all) of the source locations on-the-fly whilst generating the target image.

There is also disclosed herein a method of generating a target image based on a source image, the target image comprising target pixels and the source image comprising source pixels, the method comprising: generating a pixel value for each target pixel based upon a pixel value of one or more source pixels associated with a corresponding source location in the source image, wherein the method comprises determining said source locations on-the-fly, whilst generating the target image.

The method may employ a mathematical function to determine said source locations on-the-fly by calculation based on the locations of the target pixels in the target image. The method may determine particular source locations by such calculation and others by interpolation. The method may generate the target image pixel-by-pixel in an order. The method may calculate the source location for at least a particular target pixel based on a source location employed or calculated earlier whilst generating the target image.

There is also disclosed herein a method of generating a target image based on a source image, the target image comprising target pixels and the source image comprising source pixels, the method comprising: generating a pixel value for each target pixel based upon a pixel value of one or more source pixels associated with a corresponding source location in the source image, wherein: the source locations are expressed by Y-bit values; and the method comprises calculating at least one of the source locations (e.g. on-the-fly) based on a combination of an S-bit value and a Y-bit value made available earlier during generation of said pixel values, where S is less than Y. The (or some of the) S-bit values may be stored in advance, or calculated on-the-fly from other (smaller) stored values.

There is also disclosed herein apparatus for generating a target image based on a source image, the target image comprising target pixels and the source image comprising source pixels, the apparatus comprising: a pixel-value generator for generating a pixel value for each target pixel based upon a pixel value of one or more source pixels associated with a corresponding source location in the source image, wherein: the source locations are linked by a pattern of offset vectors, each offset vector indicating the location of a respective source location relative to that of an adjacent source location in the pattern; and the apparatus is operable to calculate at least one of the source locations based on said pattern of offset vectors.

Apparatuses corresponding to the other methods described above are envisaged. There is also disclosed herein a computer program which, when executed on a processor, causes the processor to carry out any of the methods described above. There is also disclosed herein a head-up display system, or an image-transformation system, comprising any of the aforementioned apparatuses, or configured to carry out any of the aforementioned methods.

Reference will now be made, by way of example, to the accompanying drawings, of which:
Figure 1, mentioned above, is a schematic diagram of a system considered by the inventor;
Figure 2 is a schematic diagram of a system embodying the present invention, when configured to operate in Mode C described later;
Figure 3 is a schematic diagram useful for understanding operation Modes A and B;
Figure 4A indicates parameters which may be stored in Mode A;
Figure 4B indicates parameters which may be stored, and calculations which may be performed, in Mode B;
Figure 5 is a schematic diagram useful for understanding operation Mode C;
Figure 6 indicates parameters which may be stored, and calculations which may be performed, in Mode C;
Figure 7 is a schematic diagram corresponding to that of Figure 5;
Figure 8 is a flow diagram indicative of steps that could be performed to initially set up or configure a system according to the present invention;
Figure 9 is a schematic diagram useful for understanding how the present invention may be employed when a source image is composed of separate component elements;
Figure 10 is a schematic diagram of a head-up display system (HUD) for a vehicle in accordance with an embodiment of the present invention; and
Figure 11 depicts an image capture system in accordance with and embodiment of the invention.

It has been considered, in the context of a HUD, that windshield correction may be carried out by describing the inverse distortion by a triangle mesh using the texture engine of a GPU (Graphics Processing Unit) for re-sampling the image in a frame buffer before being displayed. It has also been considered that a display controller may perform the re-sampling by dedicated hardware. For example, a parameterizeable function may compute re-sampling coordinates on-the-fly depending on the X and Y position on a display. Alternatively, a look-up mechanism may be used for horizontal and vertical displacement values of certain display positions along with some interpolation logic for pixels lying in-between.

Figure 2 is a schematic diagram of a system 100 embodying the present invention, when configured to operate in Mode C described later. System 100 may be considered an image-processing system and be implemented as image-processing apparatus. System 100 comprises a target pixel generator 110, an image buffer 120, a parameter storage unit 130 and a display means 140. The target pixel generator may be considered to embody the present invention itself or in combination with one or both of the image buffer 120 and parameter storage unit 130. For example, the display means 140 need not be provided.

Image buffer 120 is configured to store a source image which comprises source pixels. In particular, the image buffer is configured to store pixel values for the source pixels, which values define a colour and/or brightness (or similar) of the source pixels which make up the source image. As mentioned above, an image may have any one of a wide array of different formats, for example colour, black & white or greyscale, and the term "pixel value" will be interpreted to refer to any appropriate such value accordingly. That is, the present invention may be applied to any image format.

Target pixel generator 110 is operable to generate a pixel value for each pixel of a target image (which pixels may be referred to as target pixels), based upon one or more source pixels (i.e., their values as stored in the image buffer 120) associated with a corresponding source location in the source image.

For example, when generating a value for a target pixel, target pixel generator 110 is configured to access pixel values for one or more source pixels associated with a source location corresponding to that target pixel in the source image, and to generate the pixel value for that target pixel based on those access values. The one or more source pixels in such a case may be at or near the source location, for example being a group of adjacent source pixels which form an area in which the source location lies. In the case of a group of source pixels, their pixel values may contribute towards the generated pixel value of the target pixel in a weighted or other manner, for example dependent on the location of those source pixels relative to the source location.

Both "push" and "pull" methods are envisaged, the former involving processing the source pixels one by one and pushing values to the relevant target pixels, and the latter involving processing the target pixels one by one, and pulling pixel values from the source image as needed.

Such a "push" method may be suitable when implementing warping (transformation) on-the-fly, for example into a capture controller where a camera sends a continuous stream of source pixels (whereas a display might require a continuous stream of target pixels). Such a "pull" method may be suitable when implementing warping (transformation) on-the-fly, for example where a continuous stream of target pixels is needed (e.g. for a display) and the source pixels may be accessed as needed.

A feature of such a "push" method is how to implement the technique (e.g. as a re-sampling filter) in practice. To achieve an acceptable image quality in practice, each source pixel might contribute its colour to at least a 2x2 grid of destination pixels with different weights. However, other source pixels in the neighbourhood might contribute to the same target pixel, which would lead to some accumulation of weighted colors in a destination/target buffer. Moreover, the total weight of all contributions made to a target pixel might be required to sum up to 1.0, for an appropriate brightness level.

Thus, such a "push" method may involve reading data from a colour buffer before writing, leading to bandwidth and through-put implications (and read-after-write dependencies). Additionally, it may be that the weights cannot be computed on-the-fly but must be stored in a buffer (such as buffer 130), because it would be necessary to know how many source pixels contribute to a target pixel. Further, the "push" methodology may require significantly more bits to be stored than used for the original colors in order to prevent quantization artefacts, due to the implications of the weights discussed above. As another point, it may be necessary to perform some extrapolation from neighbours in order to handle target (destination) pixels that have no coverage by source pixels at all.

In view of the above, the present disclosure will focus on "pull" methodology, as being convenient where a digital representation of the target image is required, and which may conveniently supply a stream of target pixels. However, it is to be understood that equivalent "push" methods may also be implemented by analogy, for example in some kind of analog system.

Target pixel generator 110 is operable to determine the source locations which correspond to the target pixels on-the-fly, whilst generating the target image. For example, target pixel generator 110 may be configured to generate the target pixels in an order, and for each such target pixel to determine its corresponding source location based on parameters read from the parameter storage unit 130 (perhaps, in combination with parameters or working values present in the target pixel generator 110). The order may be pixel-by-pixel along each row from left to right, starting with the uppermost row and working through the rows, row-by-row from top to bottom of the target image.

As an side, other orders would of course be possible, for example a reverse of the above order or column-by-column. Indeed, other "non-standard" arrangements of pixels (and thus orders) would be possible in theory, such as a spiral (which forms a circular display).

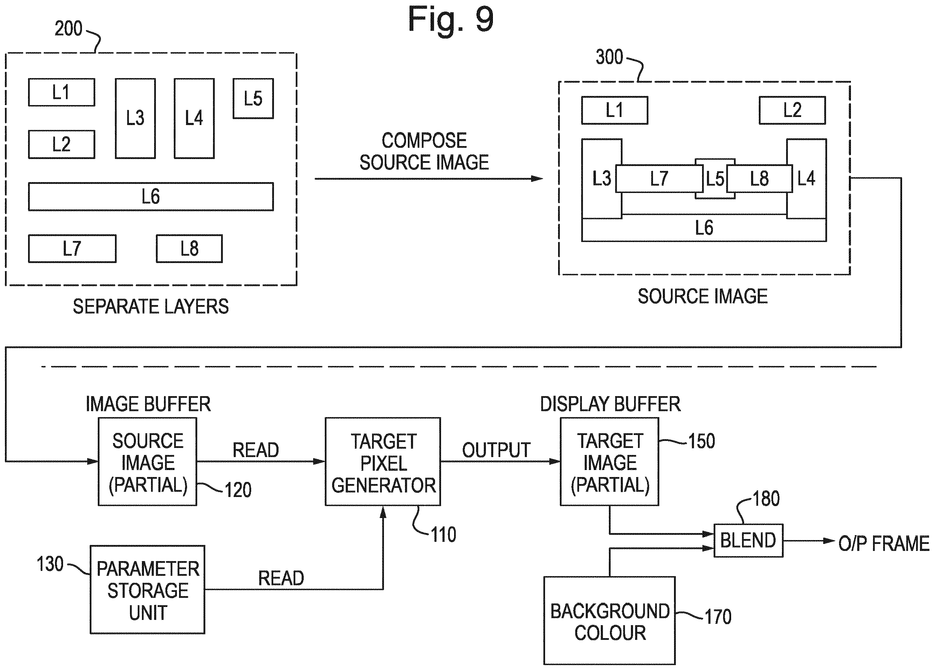

The target pixel generator 110 may be considered to follow a repeating cycle of: a) select the next target pixel to be generated (which may be the first); b) determine the source location for that target pixel using parameters accessed from the parameter storage unit 130; c) access one or more pixel values of the source image from the image buffer 120 based on the determined source location (assuming that the source image has values at the location); and d) generate the target pixel based on the accessed values. Where the source image has no values at the source location, the target pixel may also have no value, as will be appreciated from Figure 9.

Of course, in such cases (where the source image has no values at the source location) it is not necessary for the target pixel to have no value. Other options are envisaged, for example (amongst others) defining some constant (e.g. background) colour, and replicating a border pixel colour of the source image. Such techniques may be referred to as 'tiling'.

The generated target pixels may be output one-by-one as they are generated, thus creating a stream of target pixels as indicated in Figure 2. Alternatively, the target pixels may be stored in an intermediate output buffer (up to, for example, a complete target image or a series of target images). This may enable a plurality of generated target pixels (such as an entire target image) to be read in parallel.

Target pixel generator 110 may be implemented in hardware and/or in software, for example as a display controller. Target pixel generator 110 may be implemented as a computer program which, when executed on a processor, causes the processor to have the functionality of the target pixel generator 110.

Image buffer 120 and parameter storage unit 130 may be implemented as respective parts of the same physical or logical memory, or as separate physical or logical memories (e.g., buffers). Any sort of memory device or apparatus is envisaged, including RAM (Random-Access Memory) and hardware registers/buffers. Where certain parameters may be considered "fixed" in a particular embodiment, ROM (Read-Only Memory) may also be employed.

Display means 140 (which is optional in system 100, and shown simply to aid an understanding of the present invention) may be any device or apparatus suitable for displaying image data, in particular the target pixels/target image. For example, display means 140 may be a head-up display unit, or a monitor, panel or projector. Display means 140 may also be interchanged with (or used in parallel with) any other device or apparatus suitable for handling, processing, transmitting or storing image data, such as memory devices, communication apparatuses and processing apparatuses.

In certain embodiments, elements 110, 120 and 130 may be provided in combination as a single unit or device, or as separate units/devices.

As will become apparent, target pixel generator 110 may be configured to operate in one or more of three different modes, labelled A, B and C. That is, it may be configurable (for example by setting parameter values) to operate in any one of those modes, but also be configurable (by changing the parameter values) to operate in another of those modes. For example, target pixel generator 110 may be configured to operate in at least one of modes B and C. As will also become apparent, modes B and C may be considered to have particular advantages as compared to mode A. When configured to operate in mode C, the various methods, apparatuses and systems disclosed herein may be considered to embody the present invention. Modes A and B are provided as comparative examples useful for understanding the present invention.

Mode A may be considered a "brute force" mode, in which the absolute coordinates of the source locations for the target pixels are stored in the parameter storage unit 130. In such a mode, the target pixel generator 110 may be configured to simply access the coordinates of the source location for each target pixel as it is being generated. In a modified version of mode A, the coordinates of only some of the source locations (e.g., every other one) may be stored in the parameter storage unit 130, with the other source locations being determined on-the-fly by interpolation (estimation) or the like.

Modes B and C may be considered to be similar, in the sense that they determine the source locations sequentially in a linked or incremental (or "incremental build") fashion, such that one or more calculation results obtained while determining one source location are used in calculations which determine a later source location in the sequence. In this respect, the source locations may be considered to be nodes linked in a tree pattern, with one or more of the nodes "source locations" towards the root of the tree being predetermined, and the other nodes being determined one after the other down the tree (away from the root) with information (calculation results) cascading down the tree to enable first-tier nodes to be determined based on the root node, second-tier nodes to be determined based on the first-tier nodes, and so on and so forth. This process of determining (or generating) the source locations may be considered cumulative, or additive, in the sense that information used (accessed) or obtained (calculated) in earlier calculations is used in later calculations. In this respect, the process may also be considered iterative. That is, there is a dependency of later-tier nodes on earlier-tier nodes, such that the nodes should be evaluated in a sequence or order dictated by the tree.

Mode B itself may be considered an "offset vector" mode, in which a starting location in the source image (cf. a source location or a similar reference location) is predetermined or stored in advance, and in which the source locations for the target pixels are determined one after the other in a tree structure starting from the starting location. In this context, the starting location could be considered the root node of the tree and the other source locations first-tier or subsequent-tier nodes of the tree. The starting location could be an actual desired source location (corresponding to a target pixel) or a separate dedicated starting location (not corresponding to a target pixel). In this mode, offset vectors are stored in the parameter storage unit 130, and used to find one node (source location) in the tree from its parent node (source location or starting location, as the case may be) in the tree. In effect, the offset vectors may be considered to define the branches of the tree, i.e., the locations of the first-tier or subsequent-tier nodes relative to their respective (immediate) parent nodes.

Thus, in mode B the target pixel generator 110 may be considered to use the starting location (stored internally or accessed from the parameter storage unit 130) and the offset vectors as required (accessed from the parameter storage unit 130) to find or calculate the source location for each target pixel as it is required, for example as the pixel value for that target pixel is being generated. For efficiency, the target pixels may be generated in an order which follows branches of the tree structure which defines (links) the corresponding source locations, so that only some calculation results (e.g., source locations) need be retained in order to determine later source locations. In this manner, it may advantageously only be necessary to store calculation results in respect of the previous node in the tree and any higher node which has multiple child nodes (where not all of those child nodes have yet been evaluated). In this fashion, source locations may be determined on-the-fly, or on an "as needed" or "just in time" basis.

An advantage of this mode is that a parameter storage unit 130 need not store ("absolute") coordinates for all of the source locations in advance (as in mode A) but rather simply the offset vectors. Since the offset vectors may be relatively small (in terms of their length), the memory or storage capacity (in terms of bits) needed to store them (e.g. their X and Y component parts) may be smaller than for storing the absolute coordinates as in mode A.

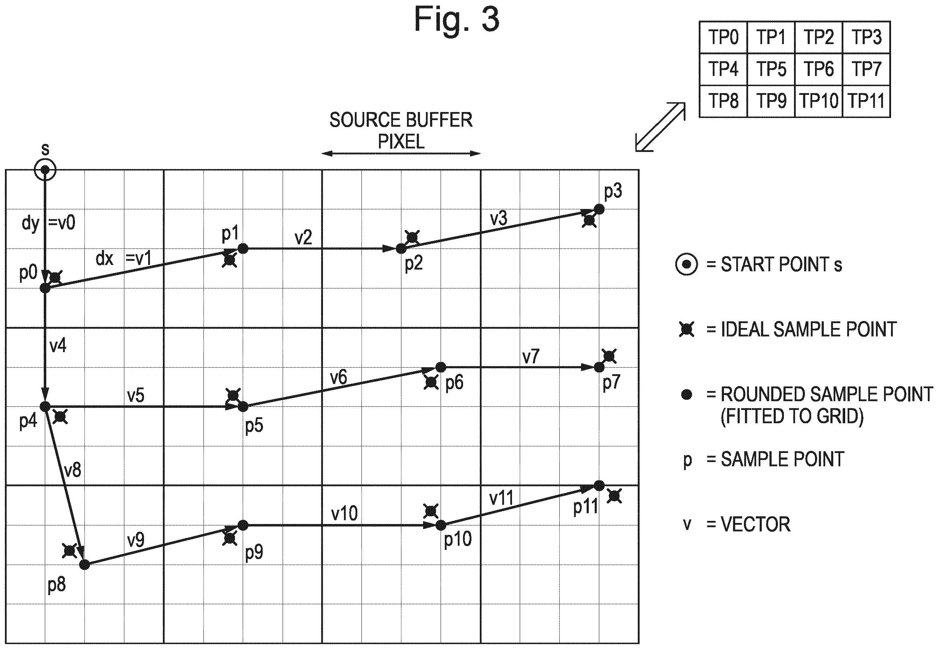

Modes A and B may be better understood with reference to Figure 3.

Figure 3 is a schematic diagram which represents (by way of boxes defined by bold lines) an array of 12 source pixels arranged into three rows and four columns. That is, each bold box represents a single source pixel. The array may correspond to part or all of a source image.

Superimposed on the source pixels is a grid which divides the length and width of each pixel into quarters (1/4), to indicate that the X and Y coordinates of locations may be defined with an accuracy to the nearest 0.25 (1/4) of a pixel, i.e. with a 2-bit fractional value. It is envisaged that a grid to allow e.g. 4-bit fractional values may be employed (to the nearest 0.0625 or 1/16 of a pixel). Other levels of accuracy could of course be employed.

Also superimposed on the source pixels is a starting point s, and a plurality of sample points p, labelled p0 to p11. These sample points are "snapped" (or rounded) to the grid such that the location coordinates may be expressed with the example 2-bit fractional values mentioned above. However, also shown are corresponding "ideal" sample points as indicated by a crossed dot, which may have been found by accurate calculation (for example in software). Thus, the sample points p are very close to the ideal sample points. The sample points p represent source locations which correspond respectively to target pixels TP0 to TP11 in a target image, and this is also indicated in Figure 3 (see the top-right portion).

The starting point s and the sample points p are linked by vectors v to form a tree structure, where the starting point s and sample points p are nodes and the vectors v are branches of the tree which connect the nodes. The vectors v correspond to the offset vectors mentioned above. The tree may be considered to have a main trunk (linking s-p0-p4-p8), and three main branches (one of which links p0-p1-p2-p3). The main trunk corresponds to the first column of target pixels (TP0-TP4-TP8), and each main branch to a row of target pixels (e.g. TP0-TP1-TP2-TP3).

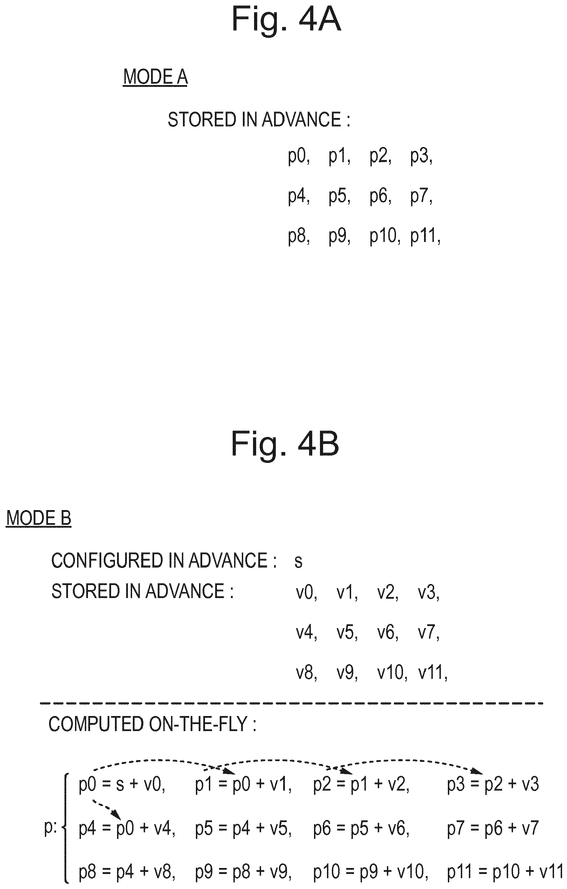

Thus, it could be appreciated that in mode A the parameter storage unit 130 may store absolute coordinates which define the absolute locations of sample points p0 to p11, and this is indicated in Figure 4A. Such coordinates are absolute in the sense that they may define any location in the source image relative to the source image's defined common reference point (usually, at one of its corners), such that the maximum X value corresponds to the full width of the source image and the maximum Y value corresponds to the full height of the source image.

In contrast, in mode B, the target pixel generator 110 may store absolute coordinates which define the starting point s, and the parameter storage unit 130 may (or need only) store values (with X and Y components) which define the vectors v0 to v11, and this is indicated in Figure 4B. Of course, these values may all be stored in the target pixel generator 110 or all stored in the parameter storage unit 130, or be divided between them in any way.

It will be appreciated that the memory capacity required to store sample points p (i.e., absolute coordinate values) would be larger than the memory capacity required to store starting point s and vectors v0 to v11 (i.e., values which define "tiny" distances from one sample point to the next).

As also indicated in Figure 4B, in mode B the sample points p0 to p11 are computed on-the-fly based on starting point s and vectors v0 to v11, and also taking benefit from the tree-structure approach. That is, once p0 has been calculated using s and v0, p1 may be calculated using this p0 and v1, following the branches (between nodes) of the tree structure. This "re-use" or "carrying-over" of calculated values is indicated by way of dotted arrows in Figure 4B for sample points p0 to p4, following the upper main branch (cf. row) of points in the tree of Figure 3 and then moving on down the main trunk (cf. column) to the next main branch (cf. row). It will be appreciated that the carrying-over follows the other branches (between nodes) of the tree, such that all of the sample points p0 to p11 may be found starting from s and v0 to v11 and by calculating the sample points p in an order which follows the branches (between nodes) of tree structure.

Given that any sample point p may be calculated by a series of calculations as in Figure 4B (following the tree structure), it would be efficient as discussed above to generate values for the target pixels TP0 to TP11 in an order which takes advantage of this tree structure, such as pixel-by-pixel from left to right along each row, and row-by-row from top to bottom, i.e., from TP0 to TP11 in numerical order.

It is incidentally noted that the tree structure in Figure 3 effectively mirrors this order, as being an efficient method of covering all sample points. That is, this structure keeps the size of vectors v0 to v11 within an acceptable limit (i.e., relatively small). Of course, sample points p0 to p11 could be connected together in a different tree structure, perhaps with a different starting point, but this would give different vectors v. The reason for connecting sample points p0 to p11 in a tree structure which mirrors the first column and rows of target pixels TP is that rows of pixels in the target image are likely to correspond to "lines" (albeit, perhaps curved) of sample points in the source image, for most transformations.

It is also incidentally noted that the parallel main branches (rows) in the tree would permit a degree of parallel processing in calculating the sample points p and thus the values of the target pixels TP.

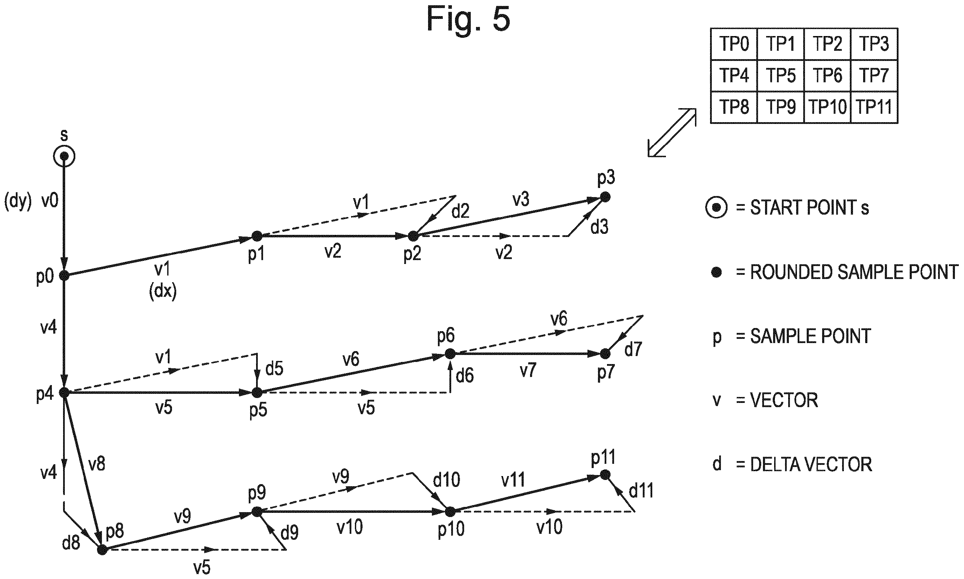

Mode C may be considered an "enhanced offset vector" mode, being an enhanced version of mode B and will be explained with reference to Figure 5.

Figure 5 is closely similar to Figure 3, in that the same sample points p0 to p11 are represented (corresponding to the same target pixels TP0 to TP11). Also shown is the same starting point s and the same vectors v0 to v11. The boxes and grid are not shown, simply to avoid overcomplicating the drawing.

Mode C is similar to mode B, in that the sample points (source locations) p can be determined one-by-one following the tree structure, starting from certain predetermined parameters (e.g., starting point s) and without needing to store in advance the absolute locations of all or almost all of the sample points p. Mode C differs from mode B in that more information is carried over from one node to the next (i.e. the calculation of one sample point p to the calculation of the next sample point p).

Specifically, in mode C it is not necessary to store all vectors v0 to v11. Instead, most of these are calculated on-the-fly using smaller vectors d, labelled in Figure 5 as delta vectors (which may be considered "correction vectors").

Given that linked nodes (sample points p) in the "rows" (main branches) or "column" (main trunk) in the tree are likely to follow (at least approximately) smooth curved lines (or even straight lines) across the source image, dependent on the transformation being performed, mode C takes advantage of this and uses the vector v between two adjacent nodes along such a "row" in combination with a delta vector d to calculate the vector v between the next two adjacent nodes along that "row". In effect, each delta vector d is used in combination with another vector which may be predicted or derived from the shape of the higher or upstream part of the tree. The same approach is used in respect of the main "column" in the tree, as will be apparent from Figure 5. As will be appreciated, the approach could be considered a "predict-then-correct" or "derive-then-correct" approach, which can build the tree structure.

For example, in Figure 5 vector v2 may be found by combining vector v1 and delta vector d2. This could be considered as using vector v1 as a prediction of vector v2, and then using d2 as a correction. Similarly, vector v3 may be found by combining vector v2 and delta vector d3, and vector v8 may be found by combining vector v4 and delta vector d8.

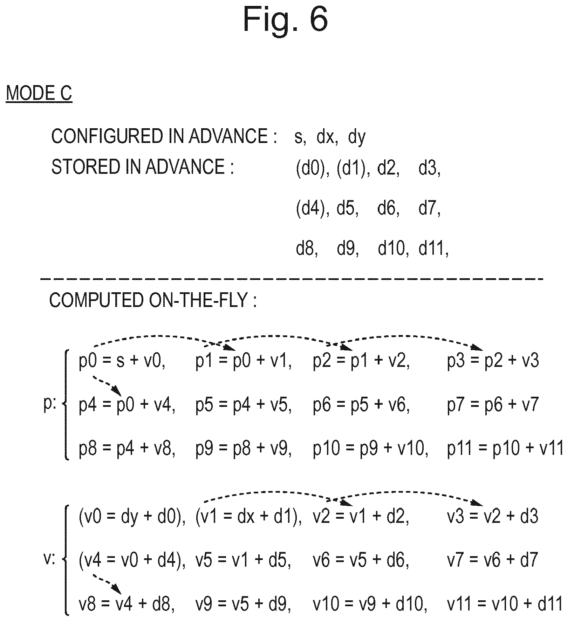

Thus, looking at Figure 5, it could be appreciated that the target pixel generator 110 may store absolute coordinates which define starting point s and parameters dx and dy (which correspond to v1 and v0, respectively). Further, parameter storage unit 130 may store values (with X and Y components) which define delta vectors d0 to d11, and this is indicated in Figure 6. Of course, these values may all be stored in the target pixel generator 110 or all be stored in the parameter storage unit 130, or be divided between them in any way.

It is incidentally noted that values d0, d1 and d4 are presented in brackets in Figure 6 to indicate a preferred embodiment in which the tree (and dx and dy) is configured such that they have value 0. As such, they need not be stored, and moreover they have value 0 in Figure 5 and thus are not shown. The computation equations provided in Figure 6 will be interpreted accordingly. For example, v0, v1 and v4 may be already known from dx and dy.

It will be appreciated that the memory capacity required to store sample points p (i.e., absolute coordinate values) as in mode A, or vectors v (i.e., the distances from one sample point to the next) as in mode B, would be larger than the memory capacity required to store the (very tiny) delta vectors d0 to d11 (or, as noted above, simply d2, d3 and d5 to d11) in mode C. Although starting point s, and parameters dx and dy may need to be stored in the present embodiment of mode C, this "overhead" may be considered insignificant when for example the target image has many (e.g. hundreds of thousands or millions) of pixels.

As also indicated in Figure 6, in mode C the sample points p0 to p11 are computed on-the-fly as in mode B, but also computing on-the-fly the vectors v2, v3 and v5 to v11 (vectors v0, v1 and v4 are known from dx and dy, and the corresponding computations are presented in brackets in Figure 6). Again, this takes advantage of the tree-structure approach, and some of the "re-use" or "carrying over" of calculation results is indicated in Figure 6 with dotted arrows by way of example, in a similar manner as in Figure 4B. As before, the carrying over follows the branches of the tree, such that all of the sample points p0 to p11 may be determined.

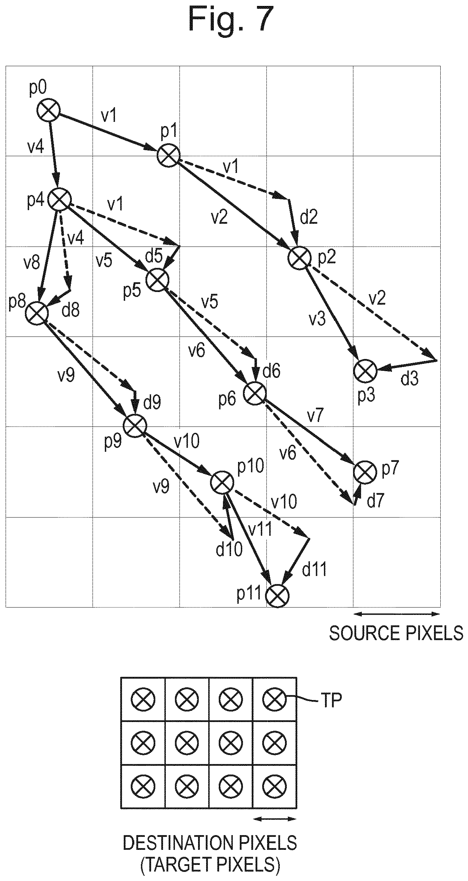

Figure 7 is a schematic diagram which is closely similar to Figure 5, and is provided to indicate that the locations of sample points p0 to p11 in a source image may differ dependent on the type of transformation being performed.

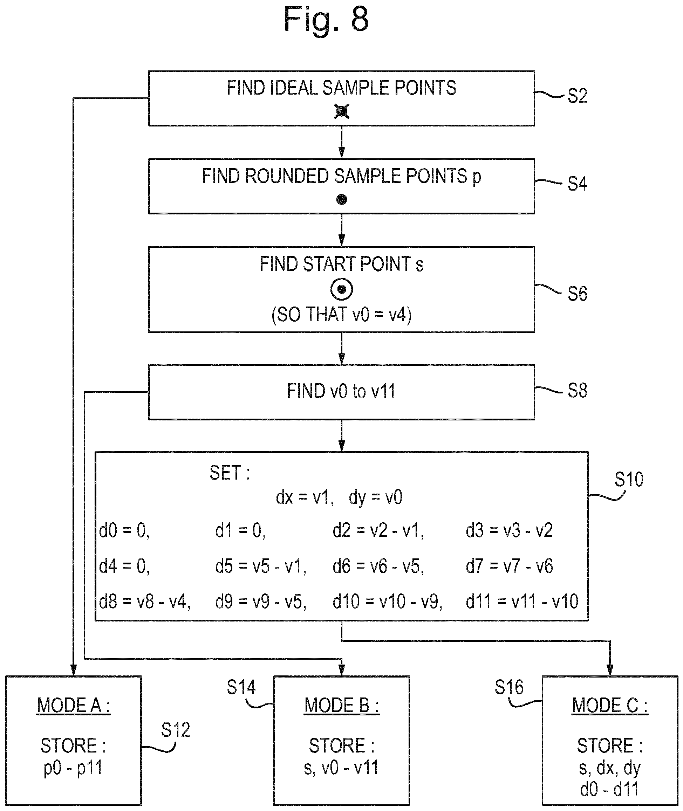

Figure 8 is a flow diagram indicative of steps that could be performed to initially set up or configure a system according to the present invention. For example, the method may be performed by a manufacturer or designer of such a system, or by the system itself (e.g. in a self-calibration mode). The method comprises steps S2 to S16, and may be considered in conjunction with Figures 3 and 5.

In step S2, the ideal sample points in a source image corresponding to target pixels of a desired target image may be found, by accurate calculation. Such calculation may take into account a known transformation to be performed when generating a target image from a source image, and in such a case be performed by the manufacturer or designer. For example, such a transformation may be known in advance for a particular system (e.g., to apply pre-distortion for a known HUD, or distortion removal in respect of images obtained via a camera lens whose characteristics are known). In a self-calibration mode, the system itself may determine the transformation required by use of a test image, for example by measuring distortion suffered without transformation and then determining the transformation required to compensate for that distortion. Such ideal sample points are shown in Figure 3 as crossed dots, as already mentioned.

In step S4, the rounded sample points p corresponding to the ideal sample points are obtained, by "rounding" or "snapping" the ideal sample points to the nearest grid position. Such sample points p are shown in Figures 3 and 5.

In step S6, the starting point s is obtained, and in this example it is chosen to have its location such that v0=v4 (as in Figures 3 and 5). This enables only one of v0 and v4 to be stored (in mode B), and d0, d1 and d4 to be equal to 0 (in mode C) and thus not stored. Of course, the starting point s could be located in another position, in which case the vector values and delta vector values mentioned above may be different and may need to be stored.

In step S8, the vectors v0 to v11 are obtained by calculation, simply based on the known sample points p0 to p11 and the starting point s. See for example Figure 3.

In step S10, the values of parameters dx, dy and d0 to d11 are set, as indicated in Figure 8. It will be appreciated that the values correspond to those discussed above in connection with Figures 5 and 6. Thus, for example, d0, d1 and d4 are set to 0 and as such need not be eventually stored (in step S16).

Steps S12, S14 and S16 correspond to modes A to C respectively, and indicate that parameter values are stored in the system 100, for example in one or more of the target pixel generator 110 and parameter storage unit 130. In mode A (S12), p0 to p11 are stored. In mode B (S14), s and v0 to v11 are stored. In mode C (S16), s, dx, dy, and d0 to d11 are stored. This overlooks the possibility of not storing v4, d0, d1 and d4, as mentioned above.

Thus, it will be understood from Figure 8 that steps S2 to S10 may be performed offline, and even separately from system 100 (for example when designing the system), to generate parameter values.

Depending on which mode of operation is desired, not all the steps S2 to S10 need be performed. For example, for mode A steps S2, S4 and S12 may be performed, for mode B steps S2, S4, S6, S8 and S14 may be performed, and for mode C steps S2, S4, S6, S8, S10 and S16 may be performed. As already mentioned, system 100 may be configured to operate in one or more of these modes, to switch between modes of operation. For example, in a practical system the parameters of S12, S14 and S16 may be stored in separate memory, and accessed and stored into target pixel generator 110 and/or parameter storage unit 130 dependent on which mode of operation is selected.

It will be appreciated that the above-described technique enables the information required for the inverse distortion by image re-sampling to be generated on-the-fly with dedicated display control hardware. In particular, there has been described a specialized format for storing a "distortion map" (for example, as depicted in Figures 3, 5 and 7) with less bits per pixel needed than in previously-considered systems. For example, see the storage required in Figures 4B and 6.

Thus, each sample-point (source location) can be read (calculated on-the-fly, based on read parameters as in modes B and C) for each target pixel from a "coordinate buffer", such as parameter storage unit 130, in memory. This allows any kind of "static" re-sampling pattern (i.e. without needing to change the parameters in parameter storage unit 130) on dynamic image content (e.g. video content, comprising a series of source images), which is particularly useful for applications like lens distortion removal or windshield correction for HUDs.

In a practical embodiment, it is envisaged that the parameters of steps of steps S12, S14 and S16 (depending on the mode employed) may be stored/buffered in a "coordinate layer", i.e. an X and Y value for each target pixel.

The following sizes may be supported (where bpp means "bits per pixel"), for example:
- 32 bpp: 2 x s12.4 (signed fix-point)
- 24 bpp: 2 x s8.4
- 16 bpp: 2 x s4.4
- 8 bpp: 2 x s0.4
- 4 bpp: 2 x s(-2).4 (means total value size = 2 bits and lowest bit = 2^-4)
- 2 bpp: 2 x s(-3).4
- 1 bpp: 1 x s(-3).4 (x and y alternating)

The fractional precision corresponds to sub-pixel precision of the sampling points on the source buffer pixel grid. These values can be interpreted as:
- Sample points p (X and Y coordinates relative to source image) - mode A.
- Vectors v (differences/deltas) between adjacent sample points - mode B
- Delta vectors d, or increments of vectors v - mode C.

Storing vectors v and even more storing delta vectors d allow to use much smaller bpp formats for the same amount of distortion in order to save memory and bandwidth. In practice, it has been found (in mode C) that 4 or even 2 bpp coordinate layers are acceptable.

By way of summary, in coordinate mode (mode A), the sample point positions (source locations) p0 to p11 are read from the coordinate layer (buffer memory). In mode B, a start point s is set up as the coordinate of p0 minus v0. The sample points (source locations p) are then computed internally as in Figure 4B. In mode C (embodying the present invention), additionally some initial delta vectors are set up, with dx (having X and Y coordinates) set to the value of v1, and dy (also having X and Y coordinates) set to the value of v0 (itself set to be the same as v4). The vectors v are then computed internally as in Figure 6.

Incidentally, as a practical note, using two's complement signed input values with 4 fractional bits results in a systematic error of 2^-5 = 0.03125 (half of an example 1/16 sub-pixel grid of a bilinear filter). An issue of this format is, however, that the range of possible values is not symmetric around null. Making this symmetric increases the effective range, which becomes very useful for small bit formats (e.g. for 4 or 2 bpp) to allow stronger distortion. A downside is that systematic error may increase, because a null increment cannot be coded any longer (which may force a displacement of 2^-5). Half of that adds to the systematic error becoming 2^-5 + 2^-6 = 0.04687. Not having a null increment means that vectors v and delta vectors d always have a value (such that there is always a shift/change), even for regular sample point patterns. This has no significant impact on the re-sampling filter though, because those changes take place in the fractional part of the interpolator (2^-5) below sub-pixel resolution (2^-4) - i.e. when there is the example 1/16 sub-pixel grid.

Figure 9 is a schematic diagram useful for understanding how the present invention may be employed when a source image is composed of separate component elements, referred to here as "layers" since they may overlap one another in the source image.

For example, in the context of an automotive application, such layers may represent different types of information to be presented to the driver, such as traffic information, road signage, driving speed and safety information. It may thus be preferable to handle and generate such layers separately. Moreover, one driver may wish such information to be arranged on the windshield differently from another driver.

Example such separate layers L1 to L8 are shown as element 200 in Figure 9, and an embodiment may be configured to compose the layers to form a source image. This may comprise positioning the layers relative to one another, with rules which govern how layers are presented when they overlap.

One such source image is also indicated in Figure 9, as element 300. It is to be noted that the source image 300 may be considered a "partial" image, given that it only has values where the layers L1 to L8 are present.

This source image may be stored in image buffer 120 and subjected to transformation using target pixel generator 110 and parameter storage unit 130 as described above, thereby to generate a "warped" (or transformed) target image. Such an image may be stored in a display buffer 150, as indicated in Figure 9.

Importantly, because source image 300 is a partial image, the output target image output to display buffer 150 may also be a partial image. As such, the image buffer 120 and display buffer 150 may be sized accordingly, saving memory capacity. That is, Figure 9 indicates a concept for composing final screen content from different layers, with only relevant portions of the screen area needing to be stored in memory. Optional elements 170 and 180 may be employed to blend a background colour or similar with the target image to create a final output frame (which may for example be displayed using a HUD system).

The advantage of composing the source image from the layers L1 to L8, and then performing transformation using the target pixel generator 110 and parameter storage unit 130 is that the techniques as described above may be employed in the same way regardless of how the layers L1 to L8 are arranged. For example, the same parameter values stored in the parameter storage unit 130 may be employed even if the user adjusts the arrangement of layers L1 to L8, since those layers are first composed to form source image 300, before applying transformation using the target pixel generator 110 and parameter storage unit 130.

As such, the parameters in the parameter storage unit 130 (and any parameters stored in the target pixel generator 110) may be considered "static" (for example, for a particular transformation such as for a particular HUD).

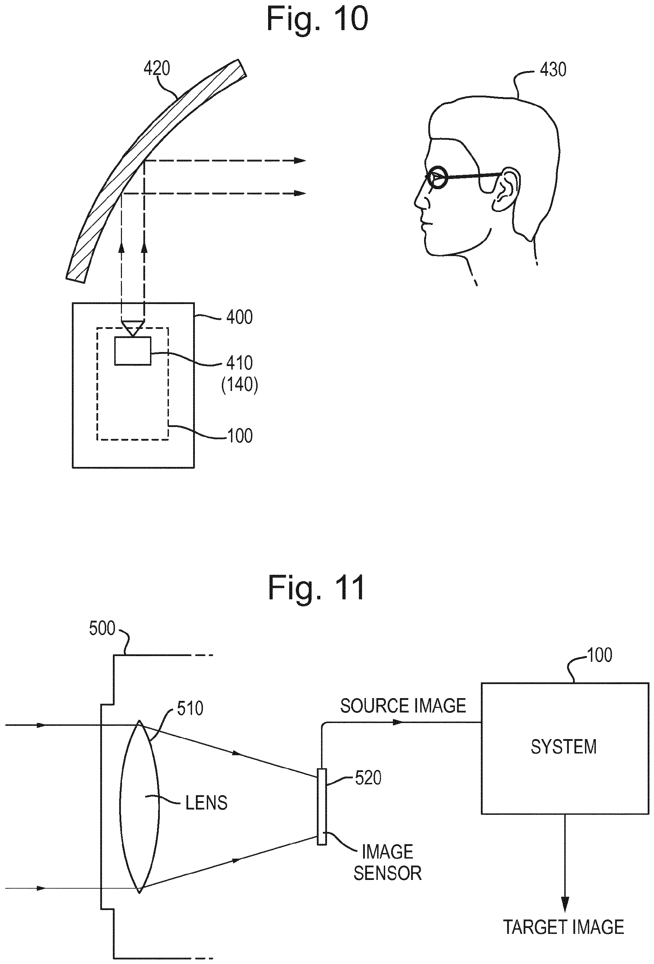

Figure 10 is a simplified schematic diagram illustrating an exemplary application in which the present invention may be employed. Specifically, Figure 10 is a schematic diagram of a head-up display system (HUD) for a vehicle in accordance with an embodiment of the present invention.

Head-up display system 400 includes a projector module 410 (which corresponds to display means 140 in system 100). Thus the projector module 410 may project the or a series of target images output by the system 100. The projected image is directed to a surface 420, which in this example is a windshield of a vehicle in an embodiment. Viewer 430 will perceive the image as reflected or impinged off of the windshield 420. The surface 420 may be partly or fully transparent, and be reflective. As the projected image is the target image as output by system 100 (which is a transformed version of the source image), the viewer will perceive the image as being non-distorted.

A vehicle (for land/water/air), such as a motorcycle, car, bus, lorry, boat or aeroplane, may comprise system 100 or 400. In another example, the surface 420 could be a lens in a pair of glasses/goggles/visor/mask (spectacles or similar) such as for a gaming application or a consumer/military-personnel personal display. For example, a wearable computer with a head-mounted display (HMD), where the surface 420 is a surface of the HMD such as a surface of a prism, may comprise system 400 or 100. Such a wearable computer with HMD may have the form of a pair of glasses. In another example, surface 420 may not be transparent, and be for example a projector screen on which an image is projected. All of these may embody the present invention.

Figure 11 is a simplified schematic diagram illustrating another exemplary application in which the present invention may be employed. Specifically, Figure 11 depicts an image capture system in accordance with one embodiment of the invention.

The image capture system 500 comprises a lens 510 and a sensor 520. Images may be captured by the image sensor 520 via the lens 510 thereby to generate a source image. Such a source image may include a distortion (aberrations etc. as previously described). The source image captured via the image sensor 520 may be input as the source image for system 100, the system 100 outputting an output target image. The system 100 may thus form a transformation on the source image to generate the target image, thereby compensating for distortion caused during capture of the original source image via the lens 510 and image sensor 520.

Image-capture apparatus (such as a camera or telescope), or image-processing apparatus (such as a computer) may comprise system 100 or 500. All of these embody the present invention.

It will be appreciated that the techniques disclosed herein reduce the amount of memory needed to store all information required to perform image transformation (e.g. generate windshield corrected content of a head-up display), reduce the additional bandwidth requirement that comes from warping (transformation) functionality, improve the quality that can be achieved for a warped/transformed image, and reduce workload for rendering engines in a system (for example, since they can be performed with simple arithmetic calculations).

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A method of generating a target image based on a source image, the target image comprising target pixels and the source image comprising source pixels, the method comprising:
generating a pixel value for each target pixel based upon a pixel value of a source pixel associated with a corresponding source location in the source image or based upon pixel values of a group of adjacent source pixels which form a region of the source image in which that source location lies,
wherein:
the source locations are organised into an order and linked in that order one to the next by a pattern of offset vectors, each offset vector indicating a respective source location relative to an adjacent source location in the pattern;
each said offset vector is defined by a combination of a derivable vector and a correction vector; and
the method comprises:
calculating the source locations in said order and based on said pattern of offset vectors;
when calculating at least a particular one of said source locations, obtaining the offset vector linking that particular source location to the source location immediately earlier in the order by deriving its derivable vector and combining that derivable vector with its correction vector, that derivable vector being the same as or calculated from the offset vector linking two source locations earlier in the order; and
obtaining one of said source locations as a reference source location and calculating at least a candidate one of the other source locations in said pattern based on the reference source location and the or each offset vector linking the reference source location to the candidate source location in said pattern.

2. A method as claimed in claim 1, wherein:
the method comprises obtaining some or all of the offset vectors by, for each of those offset vectors, deriving its derivable vector and combining that derivable vector with its correction vector.

3. A method as claimed in claim 1 or 2, wherein:
each derivable vector is derivable from one or more calculation results which would arise from calculation of the or each source location earlier in said order.

4. A method as claimed in any of the preceding claims, wherein:
the correction vectors are stored in advance; and
the or each source-location calculation in which a said derivable vector is combined with its correction vector comprises accessing the stored correction vectors.

5. A method as claimed in any of the preceding claims, wherein:
the offset vectors are expressed by X-bit values, the source locations are expressed by Y-bit values, and the correction vectors are expressed by Z-bit values, where X is less than Y, and where Z is less than X.

6. A method as claimed in any of the preceding claims, comprising composing said source image from a plurality of source-image component parts before generating the pixel values for the target pixels.

7. Apparatus (110, 120, 130) for generating a target image based on a source image, the target image comprising target pixels and the source image comprising source pixels, the apparatus comprising:
a pixel-value generator (110) for generating a pixel value for each target pixel based upon a pixel value of a source pixel associated with a corresponding source location in the source image or based upon pixel values of a group of adjacent source pixels which form a region of the source image in which that source location lies,
wherein:
the source locations are organised into an order and linked in that order one to the next by a pattern of offset vectors, each offset vector indicating a respective source location relative to an adjacent source location in the pattern;
each said offset vector is defined by a combination of a derivable vector and a correction vector; and
the apparatus (110, 120, 130) is operable to:
calculate the source locations in said order and based on said pattern of offset vectors;
when calculating at least a particular one of said source locations, obtain the offset vector linking that particular source location to the source location immediately earlier in the order by deriving its derivable vector and combine that derivable vector with its correction vector, that derivable vector being the same as or calculated from the offset vector linking two source locations earlier in the order; and
obtain one of said source locations as a reference source location and calculate at least a candidate one of the other source locations in said pattern based on the reference source location and the or each offset vector linking the reference source location to the candidate source location in said pattern.

8. A head-up display system (400), or a vehicle, or a wearable computer with head-mounted display, or an image-transformation system, comprising the apparatus (110, 120, 130) as claimed in claim 7.

9. An image capture system (500), comprising:
the apparatus (110, 120, 130) as claimed in claim 7;
a lens (510); and
an image sensor (520),
wherein:
the image sensor (520) is configured to capture an image via the lens (510) to generate said source image based on which the target image is generated by the apparatus (110, 120, 130).

## Patentansprüche

1. Verfahren zum Erzeugen eines Zielbilds auf der Grundlage eines Quellbilds, das Zielbild Zielpixel umfassend und das Quellbild Quellpixel umfassend, das Verfahren Folgendes umfassend:
Erzeugen eines Pixelwerts für jeden Zielpixel aufgrund eines Pixelwerts eines Quellpixels, welcher einem entsprechenden Quellort in dem Quellbild zugeordnet ist, oder aufgrund von Pixelwerten einer Gruppe benachbarter Quellpixel, welche einen Bereich des Quellbilds ausbilden, in welchem der Quellort liegt,
wobei:
die Quellorte in einer Reihenfolge organisiert sind und in dieser Reihenfolge einer mit dem nächsten durch eine Struktur von Versatzvektoren verbunden sind, wobei jeder Versatzvektor einen jeweiligen Quellort in Bezug zu einem benachbarten Quellort in der Struktur angibt;
jeder Versatzvektor durch eine Kombination aus einem ableitbaren Vektor und einem Korrekturvektor definiert ist; und
das Verfahren Folgendes umfasst: B
erechnen der Quellorte in der Reihenfolge und auf der Grundlage der Struktur von Versatzvektoren;
beim Berechnen mindestens eines bestimmten der Quellorte Ermitteln des Versatzvektors, welcher diesen bestimmten Quellort mit dem Quellort unmittelbar vorher in der Reihenfolge verbindet, durch Ableiten seines ableitbaren Vektors und Kombinieren dieses ableitbaren Vektors mit seinem Korrekturvektor, wobei dieser ableitbare Vektor der gleiche Versatzvektor ist oder aus diesem berechnet ist, welcher zwei Quellorte vorher in der Reihenfolge verbindet; und
Ermitteln eines der genannten Quellorte als einen Referenzquellort und Berechnen mindestens eines Kandidaten der anderen Quellorte in der Struktur auf der Grundlage des Referenzquellorts und des oder jedes Versatzvektors, welcher den Referenzquellort mit dem Kandidatenquellort in der Struktur verbindet.

2. Verfahren nach Anspruch 1, wobei:
das Verfahren Ermitteln einiger oder aller Versatzvektoren durch Ableiten seines ableitbaren Vektors für jeden dieser Versatzvektoren und Kombinieren dieses ableitbaren Vektors mit seinem Korrekturvektor umfasst.

3. Verfahren nach Anspruch 1 oder 2, wobei:
jeder ableitbare Vektor aus einem oder mehreren Berechnungsergebnissen ableitbar ist, welche aus einer Berechnung des oder jedes Quellorts vorher in der Reihenfolge entstehen würden.

4. Verfahren nach einem der vorhergehenden Ansprüche, wobei:
die Korrekturvektoren im Voraus gespeichert werden; und
die oder jede Quellortberechnung, bei welcher ein genannter ableitbarer Vektor mit seinem Korrekturvektor kombiniert wird, Zugreifen auf die gespeicherten Korrekturvektoren umfasst.

5. Verfahren nach einem der vorhergehenden Ansprüche, wobei:
die Versatzvektoren durch X-Bit-Werte ausgedrückt werden, die Quellorte durch Y-Bit-Werte ausgedrückt werden und die Korrekturvektoren durch Z-Bit-Werte ausgedrückt werden, wobei X kleiner ist als Y und wobei Z kleiner ist als X.

6. Verfahren nach einem der vorhergehenden Ansprüche, umfassend Zusammensetzen des Quellbilds aus mehreren Quellbild-Komponententeilen vor Erzeugen der Pixelwerte für die Zielpixel.

7. Vorrichtung (110, 120, 130) zum Erzeugen eines Zielbilds auf der Grundlage eines Quellbilds, das Zielbild Zielpixel umfassend und das Quellbild Quellpixel umfassend, das Verfahren Folgendes umfassend:
einen Pixelwertgenerator (110) zum Erzeugen eines Pixelwerts für jeden Zielpixel aufgrund eines Pixelwerts eines Quellpixels, welcher einem entsprechenden Quellort in dem Quellbild zugeordnet ist, oder aufgrund von Pixelwerten einer Gruppe benachbarter Quellpixel, welche einen Bereich des Quellbilds ausbilden, in welchem der Quellort liegt,
wobei:
die Quellorte in einer Reihenfolge organisiert sind und in dieser Reihenfolge einer mit dem nächsten durch eine Struktur von Versatzvektoren verbunden sind, wobei jeder Versatzvektor einen jeweiligen Quellort in Bezug zu einem benachbarten Quellort in der Struktur angibt;
jeder Versatzvektor durch eine Kombination aus einem ableitbaren Vektor und einem Korrekturvektor definiert ist; und
die Vorrichtung (110, 120, 130) betriebsfähig ist, um:
die Quellorte in der Reihenfolge und auf der Grundlage der Struktur von Versatzvektoren zu berechnen;
beim Berechnen mindestens eines bestimmten der Quellorte den Versatzvektor zu ermitteln, welcher diesen bestimmten Quellort mit dem Quellort unmittelbar vorher in der Reihenfolge verbindet, durch Ableiten seines ableitbaren Vektors und diesen ableitbaren Vektor mit seinem Korrekturvektor zu kombinieren, wobei dieser ableitbare Vektor der gleiche Versatzvektor ist oder aus diesem berechnet ist, welcher zwei Quellorte vorher in der Reihenfolge verbindet; und
einen der genannten Quellorte als einen Referenzquellort zu ermitteln und mindestens einen Kandidaten der anderen Quellorte in der Struktur auf der Grundlage des Referenzquellorts und des oder jedes Versatzvektors zu berechnen, welcher den Referenzquellort mit dem Kandidatenquellort in der Struktur verbindet.

8. Blickfeldanzeigesystem (400) oder Fahrzeug oder am Körper tragbarer Computer mit am Kopf befestigter Anzeige oder Bildtransformationssystem, umfassend die Vorrichtung (110, 120, 130) nach Anspruch 7.

9. Bildaufnahmesystem (500), Folgendes umfassend:
die Vorrichtung (110, 120, 130) nach Anspruch 7;
eine Linse (510); und
einen Bildsensor (520),
wobei:
der Bildsensor (520) konfiguriert ist, ein Bild über die Linse (510) aufzunehmen, um das Quellbild auf der Grundlage zu erzeugen, auf welcher das Zielbild durch die Vorrichtung (110, 120, 130) erzeugt wird.

## Revendications

1. Procédé de génération d'une image cible sur la base d'une image source, l'image cible comprenant des pixels cibles et l'image source comprenant des pixels sources, le procédé comprenant les étapes consistant à :
générer une valeur de pixel pour chaque pixel cible sur la base d'une valeur de pixel d'un pixel source associé à un emplacement source correspondant dans l'image source ou sur la base de valeurs de pixel d'un groupe de pixels sources adjacents qui forment une zone de l'image source dans laquelle cet emplacement source se trouve,
dans lequel :
les emplacements source sont organisés dans un ordre et liés dans cet ordre les uns aux autres par un motif de vecteurs de décalage, chaque vecteur de décalage indiquant un emplacement source respectif par rapport à un emplacement source adjacent dans le motif ;
chacun desdits vecteurs de décalage est défini par une combinaison d'un vecteur pouvant être dérivé et d'un vecteur de correction ; et
le procédé comprend les étapes consistant à :
calculer les emplacements sources dans ledit ordre et sur la base dudit motif de vecteurs de décalage ;
lors du calcul d'au moins un particulier parmi les emplacements sources, obtenir le vecteur de décalage reliant cet emplacement source particulier à l'emplacement source immédiatement avant dans l'ordre en dérivant son vecteur pouvant être dérivé et en combinant ce vecteur pouvant être dérivé avec son vecteur de correction, ce vecteur pouvant être dérivé étant identique à ou calculé à partir du vecteur de décalage reliant deux emplacements sources antérieurs dans l'ordre ; et
obtenir l'un desdits emplacements sources en tant qu'emplacement source de référence et calculer au moins un candidat parmi les autres emplacements source dans ledit motif sur la base de l'emplacement source de référence et du ou de chaque vecteur de décalage reliant l'emplacement source de référence à l'emplacement source candidat dans ledit motif.

2. Procédé selon la revendication 1, dans lequel :
le procédé comprend l'obtention de tout ou partie des vecteurs de décalage en dérivant, pour chacun de ces vecteurs de décalage, son vecteur pouvant être dérivé et en combinant ce vecteur pouvant être dérivé avec son vecteur de correction.

3. Procédé selon la revendication 1 ou 2, dans lequel :
chaque vecteur pouvant être dérivé peut être dérivé d'un ou de plusieurs résultats de calcul qui découleraient du calcul du ou de chaque emplacement source antérieur dans ledit ordre.

4. Procédé selon l'une quelconque des revendications précédentes, dans lequel :
les vecteurs de correction sont stockés à l'avance ; et
le ou chaque calcul d'emplacement source dans lequel un dit vecteur pouvant être dérivé est combiné à son vecteur de correction comprend l'accès aux vecteurs de correction stockés.

5. Procédé selon l'une quelconque des revendications précédentes, dans lequel :
les vecteurs de décalage sont exprimés par les valeurs de bit X, les emplacements sources sont exprimés par les valeurs de bit Y, et les vecteurs de correction par les valeurs de bit Z, où X est inférieur à Y et où Z est inférieur à X.

6. Procédé selon l'une quelconque des revendications précédentes, comprenant la composition de ladite image source à partir d'une pluralité d'éléments constitutifs d'image source avant de générer les valeurs de pixel pour les pixels cibles.

7. Appareil (110, 120, 130) destiné à générer une image cible sur la base d'une image source, l'image cible comprenant des pixels cibles et l'image source comprenant des pixels sources, l'appareil comprenant :
un générateur de valeur de pixel (110) pour générer une valeur de pixel pour chaque pixel cible sur la base d'une valeur de pixel d'un pixel source associé à un emplacement source correspondant dans l'image source ou sur la base de valeurs de pixel d'un groupe de pixels sources adjacents qui forment une zone de l'image source dans laquelle se trouve cet emplacement source,
dans lequel :
les emplacements sources sont organisés dans un ordre et liés dans cet ordre les uns aux autres par un motif de vecteurs de décalage, chaque vecteur de calage indiquant un emplacement source respectif par rapport à un emplacement source adjacent dans le motif ;
chacun desdits vecteurs de décalage est défini par une combinaison d'un vecteur pouvant être dérivé et d'un vecteur de correction ; et
l'appareil (110, 120, 130) peut fonctionner pour :
calculer les emplacements sources dans ledit ordre et sur la base dudit motif de vecteurs de décalage ;
lors du calcul d'au moins un particulier parmi les emplacements sources, obtenir le vecteur de décalage reliant cet emplacement source particulier à l'emplacement source immédiatement antérieure dans l'ordre en dérivant son vecteur pouvant être dérivé et combiner ce vecteur pouvant être dérivé avec son vecteur de correction, ce vecteur pouvant être dérivé étant identique à ou calculé à partir du vecteur de décalage reliant deux emplacements sources antérieurs dans l'ordre ; et
obtenir l'un desdits emplacements sources en tant qu'emplacement source de référence et calculer au moins un candidat parmi les autres emplacements sources dans ledit motif sur la base de l'emplacement source de référence et du ou de chaque vecteur de décalage reliant l'emplacement source de référence à l'emplacement source candidat dans ledit motif.

8. Système d'affichage tête haute (400), ou véhicule, ou un ordinateur pouvant être porté avec un affichage monté sur la tête, ou un système de transformation d'image, comprenant l'appareil (110, 120, 130) selon la revendication 7.

9. Système de capture d'image (500), comprenant :
l'appareil (110, 120, 130) selon la revendication 7 ;
une lentille (510) ; et
un capteur d'image (520),
dans lequel :
le capteur d'image (520) est configuré pour capturer une image via la lentille (510) pour générer ladite image source sur la base de laquelle l'image cible est générée par l'appareil (110, 120, 130).
